# EUROPÄISCHE PATENTANMELDUNG

(11) **EP 0 913 093 A1**
(43) Veröffentlichungstag der Anmeldung: **06.05.1999**
(21) Anmeldenummer: 98104355.7
(22) Anmeldetag: 11.03.1998
(51) Int. Cl.: A22C 13/02

(54) **Vorrichtung zum axialen Raffen von schlauchförmigem Verpackungsmaterial**

(30) Priorität: 29.10.1997 DE 29719179 U
(71) Anmelder: Kollross, Günter, 64521 Gross-Gerau (DE)
(72) Erfinder: Kollross, Günter, 64521 Gross-Gerau (DE)
(74) Vertreter: Jochem, Bernd, Dipl.-Wirtsch.-Ing.

(57) **Zusammenfassung**

Die Vorrichtung dient zum axialen Raffen von schlauchförmigem Verpackungsmaterial, insbesondere Kunststoffdarm für die Wurstherstellung. Sie besteht aus einem Raffwerkzeug (10), einem in dieses und das freie Ende des Schlauchmaterials (12) einführbaren und während des Raffvorgangs zurückfahrbaren Raffdorn (14). Dabei wird das geraffte Schlauchmaterial (12) zwischen einem Anschlag (16) und dem Raffwerkzeug (10) unter axialer Spannung gehalten. Nach dem Raffen einer bestimmten Länge und dem Zurückziehen des freien Endes des Raffdorns (14) vom Raffwerkzeug (10) wird das Schlauchmaterial (12) von einer Schneideinrichtung (20) durchtrennt. Um bei kurzer Raffdornlänge ein einwandfreies Abtrennen zu gewährleisten, ist ein Halteorgan (22) vorgesehen, das vor oder während des Zurückziehens des freien Endes des Raffdorns (14) vom Raffwerkzeug (10) in einem bestimmten Abstand vom Anschlag (16) nahe an den Raffdorn (14) heran bewegbar und ebenfalls vom Raffwerkzeug (10) zurückziehbar ist.

## Beschreibung

Die Erfindung betrifft eine Vorrichtung zum axialen Raffen von schlauchförmigem Verpackungsmaterial, insbesondere Kunststoffdarm für die Wurstherstellung, mit einem Raffwerkzeug, einem in dieses und das freie Ende des Schlauchmaterials einführbaren und während des Raffvorgangs derart axial zurückfahrbaren Raffdorn, daß das darauf geraffte Schlauchmaterial zwischen einem Anschlag und dem Raffwerkzeug unter axialer Spannung gehalten ist, sowie einer Schneideinrichtung zum Durchtrennen des Schlauchmaterials nach dem Raffen einer bestimmten Länge und dem Zurückziehen des freien Endes des Raffdorns vom Raffwerkzeug.

Die bisher gebräuchlichen derartigen Vorrichtungen (vgl. z. B. EP 0 041 149 B1) raffen das Schlauchmaterial etwa auf den hundertsten Teil seiner ursprünglichen Länge, also z. B. 80 m auf 80 cm. Nach dem Raffen hat das Material die Tendenz, wieder zu expandieren. Sie ist bei verschiedenen Kunststoffdärmen, wie z. B. solchen aus Polyamid 12, besonders ausgeprägt und führt dazu, daß man nach dem Raffvorgang mit dem Raffdorn und der darauf erzeugten Schlauchraupe noch verhältnismäßig weit zurückfahren muß, bevor sich das Schlauchmaterial in dem Bereich kurz hinter dem Raffwerkzeug genügend gestreckt hat, um dort problemlos geschnitten werden zu können. Der notwendige große Rückzugsweg bedingt eine Raffdornlänge, die fast doppelt so groß ist wie die Länge der Schlauchraupe. In gleichem Maße wächst auch die Länge des Maschinenbetts, der Führungen und der Antriebsorgane und damit die Höhe der Herstellungskosten.

Der Erfindung liegt die Aufgabe zugrunde, eine Vorrichtung der eingangs genannten Art zu schaffen, die auch bei kurzer Raffdornlänge und Rückzugsbewegung nach dem Raffvorgang ein einwandfreies Abtrennen des gerafften Schlauchabschnitts gewährleistet.

Vorstehende Aufgabe wird erfindungsgemäß dadurch gelöst, daß vor oder während des Zurückziehens des freien Endes des Raffdorns vom Raffwerkzeug in einem bestimmten Abstand vom Anschlag ein Halteorgan mit einer radialen Bewegungskomponente nahe an den Raffdorn heran bewegbar und ebenfalls vom Raffwerkzeug zurückziehbar ist.

Die vorgeschlagene Lösung bietet den Vorteil, daß die Länge des Raffdorns und seiner Verfahrbewegungen unabhängig von dem Rücksprungverhalten des Schlauchmaterials ist und im wesentlichen nur durch die Länge der gerafften Schlauchraupe bestimmt wird. Auch wenn bei stark expandierendem Material der Raffdorn nur z. B. ca. 10 bis 30 cm länger ist als die Schlauchraupe, wird dank des neuen Halteorgans der Bereich des Schlauchs, in dem er durchtrennt werden soll, beim Zurückziehen des Raffdorns wieder entfaltet und gestreckt und kann in dieser Form zuverlässig zentriert und geschnitten werden.

Das erfindungsgemäße Prinzip gestattet vielfältige Ausgestaltungen. Grundsätzlich spielt es keine Rolle, ob das vorgeschlagene Halteorgan mit der Lagerung des Raffdorns verbunden und zusammen mit diesem axial verfahrbar ist, oder ob es über einen eigenen axialen Antrieb zum Strecken der zuletzt erzeugten Raffalten verfügt. Vorgezogen wird allerdings die zuerst genannte Ausführung, bei der durch den Antrieb zum Zurückziehen des Raffdorns gleichzeitig auch das Halteorgan mitgenommen und vom Raffwerkzeug zurückgezogen wird.

Die Erfindung läßt sich mit Vorteil auch bei Vorrichtungen mit mehr als einem Raffdorn anwenden. Wenn zwei oder mehr Raffdorne in üblicher Weise mit ihrem hinteren Ende an einer Revolverscheibe gelagert sind und durch deren schrittweise Drehbewegung abwechselnd in diejenige Drehschaltstellung gebracht werden, in der sie mit dem Raffwerkzeug beim Raffen zusammenwirken, kann ein einziges Halteorgan genügen, um nacheinander die jeweils auf den verschiedenen Raffdornen gebildeten Schlauchraupen beim Zurückziehen vom Raffwerkzeug am Expandieren zu hindern. Selbstverständlich könnte auch jeweils neben jedem Raffdorn ein nur diesem zugeordnetes Halteorgan an der Revolverscheibe gelagert sein. Vorzugsweise wird man jedoch nur ein einziges Halteorgan in zentraler Lage an der Revolverscheibe anbringen, und zwar relativ zu dieser drehbar, so daß es entweder unabhängig von ihrer Drehbewegung dauerhaft auf diejenige Raffdornstellung ausgerichtet bleiben kann, in der die Raffdorne mit dem Raffwerkzeug zusammenwirken, oder zunächst zusammen mit der Revolverscheibe drehen und dann jeweils durch eine eigene Drehbewegung auf den nunmehr in Raffposition stehenden Raffdorn ausgerichtet werden kann.

In der bevorzugten praktischen Ausführungsform ist das Halteorgan ein radial bis etwa auf den Außendurchmesser des Raffdorns in die Falten des gerafften oder teilweise wieder gestreckten Schlauchmaterials einführbarer oder einschwenkbarer Finger. Ein solches punktuelles Halteorgan genügt, um beim Zurückziehen des Raffdorns vom Raffwerkzeug auch die auf dem Raffdorn sitzende Schlauchraupe mit zurückzuziehen. Wenn, wie bevorzugt, der gegen das geraffte Schlauchmaterial eindrückbare Teil des Halteorgans aus Gummi oder Kunststoff besteht und kein fester Andruck gegen den Raffdorn erfolgt, kann sich, falls im Einzelfall erforderlich, während des Zurückziehens der gerafften Schlauchraupe vom Raffwerkzeug Schlauchmaterial zwischen dem fingerförmigen Halteorgan und dem Raffdorn hindurchziehen.

Es ist weiterhin von Vorteil, wenn der Abstand des Halteorgans vom Anschlag bzw. dem vorderen Ende des Raffdorns einstellbar ist, um ihn bei einem Wechsel des Materials oder Kalibers den geänderten Bedingungen anpassen zu können.

Nachfolgend wird ein schematisch dargestelltes Ausführungsbeispiel anhand der Zeichnung näher erläutert. Es zeigen:
- Fig. 1: die wesentlichen Teile einer Raffvorrichtung unmittelbar nach dem Raffen einer bestimmten Länge Kunststoffdarm für die Wurstherstellung und
- Fig. 2: in gleicher Ansicht wie Fig. 1 die Teile der Vorrichtung nach dem Zurückziehen des Raffdorns vom Raffwerkzeug und dem Abtrennen des gerafften Schlauchabschnitts.

Die Zeichnung zeigt nur die wesentlichen Teile einer Raffvorrichtung, wie sie z. B. in der EP 0 041 149 B1 beschrieben ist. Die Vorrichtung hat ein an sich bekanntes Raffwerkzeug 10, bestehend z. B. aus zwei oder drei Raffrädern, die schlauchförmiges Verpackungsmaterial 12 auf einem in dieses und das Raffwerkzeug 10 eingeführten Raffdorn 14 ziehharmonikaartig in Falten legen und zum hinteren Ende des Raffdorns 14 hin gegen einen dort angebrachten Anschlag 16 schieben und dabei die Falten zusammendrücken. Während des fortschreitenden Raffvorgangs wird der zu Beginn bis fast zum Anschlag 16 durch das Raffwerkzeug 10 hindurchgeschobene Raffdorn 14 in dem Maße gesteuert zurückgezogen, wie aus dem Schlauchmaterial 12 eine zwischen dem Anschlag 16 und dem Raffwerkzeug 10 unter einem bestimmten axialen Druck gehaltene Schlauchraupe 18 in ihrer Länge wächst.

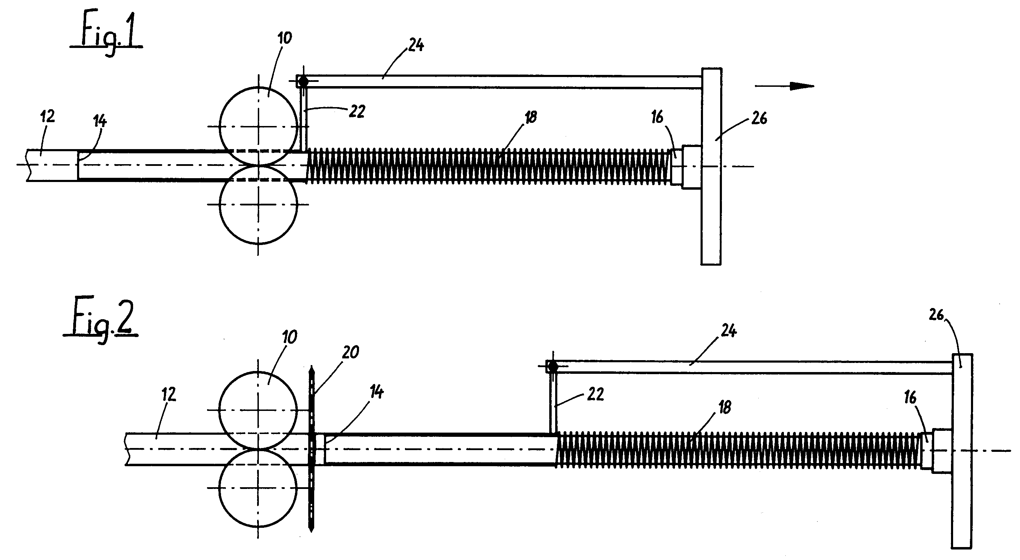

Nachdem eine vorbestimmte Länge Schlauchmaterial 12 zur Schlauchraupe 18 gerafft worden ist, muß der geraffte Abschnitt vom Schlauchvorrat abgetrennt werden. Dies geschieht im Ausführungsbeispiel mittels eines Kreismessers 20. Da es schwierig wäre, einen Schnitt um den Raffdorn herum auszuführen, wird er üblicherweise, wie in Fig. 2 gezeigt, vollständig aus dem Raffwerkzeug 10 herausgezogen und dann das Schlauchmaterial 12 in dem Bereich zwischen dem freien Ende des Raffdorns 14 und dem Raffwerkzeug 10 mittels der Schneideinrichtung 20 durchtrennt. Es versteht sich, daß diese auch mit einem anderen Schneidorgan als einem Kreismesser ausgerüstet sein kann.

Es ergeben sich sehr ungünstige Schnittbedingungen und Qualitätseinbußen durch ungenaue Schnitte, wenn die Schneideinrichtung 20 durch die geraffte Schlauchraupe 18 schneiden muß. Daher wird der Raffdorn 14 mit der Schlauchraupe 18 nach dem Raffvorgang so weit in Rückzugsrichtung verfahren, daß sich die zuletzt erzeugten Falten wieder zurückbilden und das Schlauchmaterial 12 hinter dem Raffwerkzeug 10, wo die Schneideinrichtung 20 angeordnet ist, eine im wesentlichen gestreckte Lage einnimmt, die vom Schneidorgan einwandfrei durchtrennt werden kann. Wenn jedoch das geraffte Material ein sehr starkes Rücksprungverhalten hat, muß man den Raffdorn 14 mit der Schlauchraupe 18 sehr weit zurückfahren, und entsprechend lang muß auch der Raffdorn sein, um die expandierte Schlauchraupe 18 zu tragen und den gestreckten Abschnitt des Schlauchmaterials 12 an der Schnittstelle abzustützen.

Um den zuletzt genannten Mangel zu beheben, ist bei der gezeigten Raffvorrichtung vorgesehen, daß am Ende des Raffvorgangs oder nach diesem in einem bestimmten Abstand zum vorderen Ende des Raffdorns 14 bzw. zum Anschlag 16 ein als Halteorgan 22 dienender Finger mit einer radialen Bewegungskomponente in die gegen Ende des Raffvorgangs erzeugten Falten der Schlauchraupe 18 einfährt oder eingeschwenkt wird, wobei es sich als zweckmäßig erwiesen hat, bis etwa auf den Außendurchmesser des Raffdorns 14 einzufahren. Der Finger 22 ist an einer Halterung 24 gesteuert beweglich angebracht, die ihrerseits an einer Tragplatte 26 befestigt ist, an der auch das hintere Ende des Raffdorns 14 gelagert ist. Diese Verbindung des Halteorgans 22 mit dem Raffdorn 14 über die gemeinsame Tragplatte 26 hat den Vorteil, daß ein einziger axialer Antrieb zum axialen Vorschieben und Zurückziehen sowohl des Raffdorns 14 als auch des Halteorgans 22 genügt. Wenn somit nach dem Eindrücken des Halteorgans 22 in das zuletzt erzeugte Ende der Schlauchraupe 18 die Tragplatte 26 weiter vom Raffwerkzeug 10 zurückgezogen wird, fährt auch das Halteorgan 22 mit zurück und verhindert die bisher stattfindende elastische axiale Ausdehnung der Schlauchraupe 18, wie der Vergleich zwischen Fig. 1 und Fig. 2 zeigt.

Da nur das zwischen dem eingefahrenen Halteorgan 22 und dem Raffwerkzeug 10 befindliche Schlauchmaterial 12 bei der Rückzugsbewegung glattgezogen zu werden braucht, um den Schneidvorgang sauber ausführen zu können, kommt man mit einer Raffdornlänge aus, die z. B. nur etwa 10 bis 30 cm oder etwa 10 bis 25 % länger ist als die vom Halteorgan 22 eingegrenzte Länge der Schlauchraupe 18. Man kann z. B. mit Raffdornen von 1 m Länge arbeiten, wo bisher 1,40 oder 1,50 m erforderlich waren.

In der bevorzugten praktischen Ausführung ist die Tragscheibe 26 eine Revolverscheibe mit zwei oder mehr auf gleichem Radius daran gelagerten Raffdornen 14. Der Anschlag 16 ist eine verschieblich auf dem Raffdorn 14 sitzende Abzugsbüchse, die sich während des Raffvorgangs an der Revolverscheibe 26 axial abstützt und in einem späteren Arbeitsschritt dazu dient, die geraffte Schlauchraupe 18 vom Raffdorn 14 abzustreifen. Im Falle der genannten Revolverscheibe als Tragscheibe 26 ist zweckmäßigerweise die Halterung 24 des Halteorgans 22 zentral an der Revolverscheibe angebracht. Ein am ortsfesten Maschinenrahmen fixiertes, in die axial verschiebliche Halterung 24 eingreifendes Halteelement verhindert, daß sich das Halteorgan 22 zusammen mit der Revolverscheibe 26 dreht, so daß ein einziges Halteorgan 22 genügt, welches immer auf den jeweils in Raffposition befindlichen Raffdorn 14 ausgerichtet ist.

Wenn nach dem Abschneiden des gerafften Schlauchabschnitts der bis dahin üblicherweise darin aufrecht erhaltene Überdruck beseitigt ist, sitzt die Schlauchraupe fester auf dem Raffdorn, und die Expansionsneigung ist wesentlich geringer. Deshalb springt normalerweise beim anschließenden Drehschalten der Revolverscheibe die Schlauchraupe nicht vom Raffdorn. Sicherheitshalber könnte aber auch nach dem Durchtrennen des Schlauchmaterials ein leicht lösbares Anschlagglied am vorderen Ende des Raffdorns angebracht oder ausgefahren werden, das das Schlauchmaterial zurückhält.

## Patentansprüche

1. Vorrichtung zum axialen Raffen von schlauchförmigem Verpackungsmaterial, insbesondere Kunststoffdarm für die Wurstherstellung, mit einem Raffwerkzeug (10), einem in dieses und das freie Ende des Schlauchmaterials (12) einführbaren und während des Raffvorgangs derart axial zurückfahrbaren Raffdorn (14), daß das darauf geraffte Schlauchmaterial (12) zwischen einem Anschlag (16) und dem Raffwerkzeug (10) unter axialer Spannung gehalten ist, sowie einer Schneideinrichtung (20) zum Durchtrennen des Schlauchmaterials (12) nach dem Raffen einer bestimmten Länge und dem Zurückziehen des freien Endes des Raffdorns (14) vom Raffwerkzeug (10), **dadurch gekennzeichnet**, daß vor oder während des Zurückziehens des freien Endes des Raffdorns (14) vom Raffwerkzeug (10) in einem bestimmten Abstand vom Anschlag (16) ein Halteorgan (22) mit einer radialen Bewegungskomponente nahe an den Raffdorn (14) heran bewegbar und ebenfalls vom Raffwerkzeug (10) zurückziehbar ist.

2. Vorrichtung nach Anspruch 1, **dadurch gekennzeichnet**, daß der Raffdorn (14) zwischen seinem freien Ende und dem Anschlag (16) nur etwa 10 bis 25 % länger ist als der Abstand zwischen dem Halteorgan (22) und dem Anschlag (16).

3. Vorrichtung nach Anspruch 1 oder 2, **dadurch gekennzeichnet**, daß die Schneideinrichtung (20) ein Kreismesser ist, das zwischen dem freien Ende des Raffdorns (14) und dem Raffwerkzeug (10) das Schlauchmaterial (12) durchtrennt.

4. Vorrichtung nach Anspruch 3, **dadurch gekennzeichnet**, daß axial zwischen dem Raffwerkzeug (10) und der Schneideinrichtung (20) eine an sich bekannte Schlauch-Zentriereinrichtung angeordnet ist.

5. Vorrichtung nach einem der vorhergehenden Ansprüche, **dadurch gekennzeichnet**, daß der Raffdorn (14) sowie wenigstens ein weiterer Raffdorn mit ihren hinteren Enden auf gleichem Radius an einer Revolverscheibe (26) gelagert sind und das Halteorgan (22) an einer zentral an der Revolverscheibe (26) angeordneten Halterung (24) angebracht, aber drehfest gehalten ist.

6. Vorrichtung nach einem der vorhergehenden Ansprüche, **dadurch gekennzeichnet**, daß das Halteorgan (22) ein radial bis etwa auf den Außendurchmesser des Raffdorns (14) einfahrbarer oder einschwenkbarer Finger ist.

7. Vorrichtung nach einem der vorhergehenden Ansprüche, **dadurch gekennzeichnet**, daß der gegen das geraffte Schlauchmaterial (18) andrückbare Teil des Halteorgans (22) aus Gummi oder Kunststoff besteht.

8. Vorrichtung nach einem der vorhergehenden Ansprüche, **dadurch gekennzeichnet**, daß das Halteorgan (22) radial so weit über den Außendurchmesser der Raupe (18) des gerafften Schlauchmaterials hinaus zurückziehbar oder zurückschwenkbar ist, daß es beim Einführen des Raffdorns (14) in das Raffwerkzeug (10) an diesem vorbei bewegbar ist.
